(19) Europäisches Patentamt
European Patent Office
Office européen des brevets

(11) Publication number: 0 104 677 B1

# (12) EUROPEAN PATENT SPECIFICATION

(45) Date of publication of patent specification: 12.11.86

(51) Int. Cl.[4]: A 01 N 37/40

(21) Application number: 83201203.3

(22) Date of filing: 19.08.83

## (54) Chemical sterilisation of insects with salicyl anilides.

(30) Priority: 17.09.82 US 419242

(43) Date of publication of application: 04.04.84 Bulletin 84/14

(45) Publication of the grant of the patent: 12.11.86 Bulletin 86/46

(84) Designated Contracting States: AT BE CH DE FR GB IT LI LU NL SE

(56) References cited:
AU-B-58 153
BE-A-890 119
GB-A-1 183 641
GB-A-1 421 589
US-A-4 005 218

(73) Proprietor: JANSSEN PHARMACEUTICA N.V.
Turnhoutsebaan 30
B-2340 Beerse (BE)

(72) Inventor: Van Gestel, Jozef Frans Elisabetha
Renier Sniederspad 9
B-2350-Vosselaar (BE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 104 677 B1

**Description**

Background of the invention

In U.S. Pat. No. 4,005,218, Brit. Pat. No. 1,183,641 and Belgian Pat. No. 796,406 there are described a range of salicylanilide derivatives which are taught to be useful as fascioliscidal and parasiticidal agents. It has now been found that a certain subclass of these compounds have valuable insect-chemosterilising properties.

Description of the invention:

The present invention is concerned with a method or composition for reducing or eradicating an insect population by a method other than the systemic administration to warm-blooded animals comprising the use of a salicylanilide of the formula

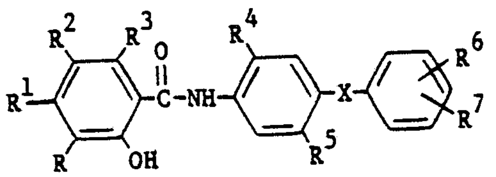 (I),

the physiologically acceptable amine addition salts and metal salts thereof, wherein:

R is selected from hydrogen, halo, $C_{1-5}$ alkyl and nitro;

$R^1$ is selected from hydrogen and halo;

$R^2$ is selected from hydrogen, halo, $C_{1-5}$ alkyl and nitro;

$R^3$ is selected from hydrogen and $C_{1-5}$ alkyl;

$R^5$ is selected from hydrogen, halo, trifluoromethyl and cyano;

$R^4$ is selected from the group consisting of hydrogen, halo and $C_{1-5}$ alkyl;

$R^6$ and $R^7$ are each independently from the other selected from hydrogen, halo and trifluoromethyl; and

X is selected from CO and CHCN.

As used herein, "$C_{1-5}$ alkyl" may be straight or branched chains, such as, for example, methyl, ethyl, 1-methylethyl, 1,1-dimethylethyl, propyl, butyl and pentyl, and the terms "halo" is generic to fluoro, chloro, bromo and iodo.

Examples of metal salts include inter alia sodium, potassium, calcium, copper and iron salts and amine addition salts include addition salts with inter alia piperidine, piperazine, *N,N*-diethylethanamine, *N*-methylglucamine, methanamine, α-methylbenzenemethanamine and 2-hydroxyethanamine.

A preferred compound within the scope of formula (I) is *N*-[5-chloro-4-[(4-chlorophenyl)cyanomethyl]-2-methylphenyl]-2-hydroxy-3,5-diiodobenzamide which is generically designated as closantel. The compound is being used as an effective flukicide.

The compounds of formula (I) and their salts are generally known compounds and they may be prepared by known methods. Particular reference is made in this connection to U.S. Pat. No. 4,005,218, Brit. Pat. No. 1,183,641 and Belgian Pat. No. 796,406. Apart from the chemical preparation of the concerned compounds and their physical properties, the said references also disclose their useful parasiticidal activities. The compounds are taught to exhibit anthelmintic, in particular fascioliscidal activities. In U.S. Pat. No. 4,005,218 it is further indicated that the compounds possess strong activity against a number of arthropod parasites such as, for example, Oestrus ovis, Hypoderma bovis, Dermatobia hominis, Lucillia etc. All of these arthropods are larval stages of insects that live as endo- or ectoparasites on warm-blooded animals and take their food from animal body fluids. When systemically administered to host animals, the compounds (I) are taken up in the body fluids and are thus absorbed by the parasites which are killed by the direct action of the compounds.

It has now been discovered that the compounds of formula (I) and salts thereof possess useful chemosterilising properties. When fed in appropriate amounts to adult insects they inhibit reproduction without killing the insects themselves. This sterilant activity manifests itself both on female and male insects.

Controlling and eradicating insect populations through sterilisation is a highly desirable objective in view of its definite advantages in comparison with classical methods, in particular the use of insecticides. In its original way of application, the so-called male-release-technique, large numbers of sterile male insects are released in a certain area. As far as their population largely outnumbers the natural population of fertile males, the majority of the females mate with an infertile male and hence do not produce progeny. By continuously releasing sterilized males, the chances of the decreasing female population to mate with an infertile male are constantly rising and ultimately complete eradication of the past population can be achieved.

The above technique, while being effective and safe, nevertheless has its disadvantages, a major disadvantage being the necessity to raise, sterilize and release massive numbers of insects. It would

therefore be much more attractive to sterilize the insects directly in the field by means of appropriate chemicals. Many chemosterilants have been discovered and investigated. Most of them act as alkylating agents or anti-metabolites, the toxicology of which is in general critical. Some of them have shown teratogenic, carcinogenic, mutagenic and sterilizing effects on warm-blooded animals.

The compounds of formula (I) herein have proven both effective and safe. They specifically sterilize insects while being harmless to warm-blooded animals, even when administered at relatively high doses.

Without being bound by theory it is assumed, and partly deduced from experimental data, that the subject compounds interfere with the synthesis of certain specific proteins involved in the ovogenesis and spermatogenesis of the insects. The compounds are particularly useful since they exert their sterilizing effect both on female and male insects.

As a consequence, upon treatment of an insect population, the chances of an untreated or ineffectively treated female to mate with an untreated or ineffectively treated male will be greatly reduced.

In these circumstances a complete or nearly complete eradication of a certain insect population will be achieved much more rapidly than if only one sex would be affected.

The chemosterilant activity of the subject compounds is clearly evidenced by the results obtained in the following experiments.

Chemosterilising activity of test compounds in Musca domestica (house-fly).

1 ml of a 1% stock solution of the test compound in acetone was first diluted with 8 ml of 0.1 M phosphate buffer of pH 7.5 and then added dropwise while stirring to a 7% solution of bovine serum albumin in 0.1 M phosphate buffer of pH 7.5 to reach a final concentration of 100 ppm. A dilution of a placebo formulation with phosphate buffer added to bovine albumin was used as a control. 5% Saccharose was added to all test solutions. 2 ml of the test solution was pipetted on a filter-paper (diameter: 50 mm) in a petri-dish (diameter: 55 mm). Each dish was placed in a glass-jar together with 15 male or female less-than-one-day old flies. The flies were kept in the jar for 3 days and each day the test solution was renewed. After this period of treatment 15 male and 15 female flies were put together and supplied with water and dry fly food containing 45.5% of milk-powder, 45.5% of cane-sugar, 9% of autolysed yeast and 0.09% of cholesterol.

On the indicated day after the end of the treatment eggs were collected in the following standardized manner. Petri-dishes (diameter: 55 mm) were filled with small expanded clay particles, moistened with a solution of 5 g milk-powder, 5 g of beer-yeast and 5 ml of a saturated ammonium carbonate solution in 320 ml of water. One petri-dish was introduced in each fly cage.

After 6 hours the dish was removed and the eggs were collected on a series of sieves. The eggs were counted and a sufficient number (about 100) were placed on moistened black paper in a petri-dish and kept at 35°C. The rate of hatching was evaluated after one day.

The data in table I show the influence of closantel on the hatching rate of house-fly eggs at various times after treatment of females, males or both.

Table II shows the influence of various compounds of formula (I) on egg count and hatching rate at 4 days after treatment of both female and male house-flies.

TABLE I

Effect of 100 ppm closantel on the fertility of the house-fly

| Day of egg collection | Treatment Schedule | | | |
|---|---|---|---|---|
| | Untreated males × untreated females | Treated males × untreated females | Untreated males × treated females | Treated males × treated females |
| 3 | 95 | 5 | —* | —* |
| 6 | 100 | 1 | 20 | —* |
| 9 | 95 | —* | 46 | —* |

—*: no eggs laid.

TABLE II

Effect of 100 ppm of compounds of formula (I) on egg count and hatching rate of Musca domestica on the 4th day after treatment

| Compound No. | Compound structure / see formula (I) | | | | | No. of eggs | % hatch |
|---|---|---|---|---|---|---|---|
| | $R, R^1, R^2, R^3$ | $R^4$ | $R^5$ | X | $R^6, R^7$ | | |
| 1 | $3,5-I_2$ | $2-CH_3$ | 5-Cl | CH(CN) | 4-Cl | 140 | 4 |
| 2* | $3,5-I_2$ | $2-CH_3$ | 5-Cl | CH(CN) | 4-Cl | 250 | 6 |
| 3 | $3,5-I_2$ | – | $3-CF_3$ | CH(CN) | 4-Cl | 500 | 11 |
| 4 | $3,5-I_2$ | – | $3-CF_3$ | CH(CN) | $3-CF_3$, 4-Cl | 550 | 14 |
| 5 | $3,5-I_2$ | – | 3-CN | CH(CN) | 4-Cl | 95 | 7 |
| 6 | $3,5-I_2$ | – | 3-Cl | CH(CN) | 4-Cl | 500 | 10 |
| 7 | $3,5-I_2$ | 2-Cl | 5-Cl | CH(CN) | 4-Cl | 600 | 13 |
| 8 | $3-NO_2$, 5-I | – | 3-Cl | CO | 4-Cl | 130 | 5 |
| 9 | $3,5-I_2$ | $2-i.C_3H_7$ | 5-Cl | CO | 4-Cl | 110 | 5 |

* : sodium salt.

** : mean values of 10 experiments.

In view of their potent chemosterilant activities the compounds of formula (I) may be used for the reduction and eradication of unwanted populations of various insect species, such as, for example Ceratitis capitata (Mediterranean fruit-fly), Hypoderma bovis (northern cattle grub), Callitroga hominivorax (screw worm-fly), Phormia regina, Lucillia spp and Calliphora spp (blow-flies), Sarcophaga spp (flesh-flies), Musca autumnalis (face-fly), Musca domestica (house-fly), Stomoxys calcitrans (stable-fly) and Glossina palpalis (tsetse-fly).

In order to obtain optimal results it is important to treat an isolated population as a whole thus avoiding the penetration of new fertile specimens into the treated area. Consequently, the compounds are particularly suited for combating insect pests in isolated areas such as, for example, closed rooms, e.g., stables, stock-houses, glass houses, storage rooms for fruits, vegetables, cereals and fodder. Such populations may also be present in open areas where contact with other populations is greatly reduced or prevented by natural circumstances, as may be the case with isolated farms, herds or crop fields. In all circumstances it will be preferable to treat the population as a whole. Occasionally it will be advantageous to firstly reduce the population by classical means e.g. with insecticides. Depending on the circumstances such as the nature of the pest population, its habitat and the extend of the area wherein it is present, various methods of treatment may be used. In any event the active ingredient, in order to be effective, must be taken up by the insects and in general it will therefore be necessary to mix the active ingredient with or apply it to substances or products whereon the insects feed themselves. For example, compositions may be used which contain the active ingredient together with appropriate feedstuffs for the insects such as, for example carbohydrates, in particular sugars, proteins of animal or vegetable origin, amino acids or extracts.

Various substances may be added to attract the insects. Such substances may be foodstuffs for which the insects have a specific preference or they may be specific attractants, e.g., brewer's yeast, vanillin, milk-powder, molasses, dyes or muscamone. Other substances including preservatives such as, for example, benzoic acid, butylated hydroxyanisole and butylated hydroxytoluene, may be added to improve the stability of the active ingredients. Particularly good results have been obtained when the substances are used in the form of a coprecipitate with protein, e.g., bovine serum albumin. In certain circumstances it may be advantageous to formulate the active ingredients in microcapsules of appropriate polymeric materials.

The chemosterilant compositions according to the invention, which may take any physical form, e.g. liquid, semi-solid (e.g. pastes) or solid (e.g. powders or granulates, may be applied to specific localized areas, in particular in the form of baits, or they may be sprayed over part or all of the area to be treated e.g., by dusting, spraying or smearing. Sometimes it may be appropriate to mix the active ingredients with the products or substances on which the insects are used to feed themselves. When the particular insect species involved is completely or partially feeding itself with animal body fluids, it may be appropriate to administer the compounds in appropriate amounts to the host animals. Depending on the nature of the compositions and the manner and circumstances wherein they are to be used, the concentration of the active ingredient therein may vary within wide limits. In general the concentration will preferably not be lower than about 0.001% of the composition. There is almost no upper limit. For reasons of convenience and ease of formulation the concentration will in general not be higher than about 50% of the composition and preferably not higher than about 10%. Of course, higher concentrations may be warranted in concentrates or pre-mixes. Suitable compositions according to the present invention are given in the following examples which are intended to illustrate and not to limit the scope of the invention.

Example I

Preparation of chemosterilant compositions

A. Preparation of a concentrated composition comprising 8% of *N*-[5-chloro-4-[(4-chlorophenyl)cyanomethyl]-2-methylphenyl]-2-hydroxy-3,5-diiodobenzamide, sodium salt, dihydrate (closantel sodium salt).

To a mixture of 75 ml of ethanol and 75 ml of 0.1M phosphate buffer ($KH_2PO_4$ + $Na_2HPO_4$) were added 10 g of bovine serum albumine and 1 g of closantel sodium salt and the whole was stirred until a clear solution was obtained. The solution was evaporated and the residue was dried and finely milled to yield about 12.50 g of a powdery concentrate containing 8% of closantel sodium salt (concentrate A).

The said concentrate may be used as a pre-mix for incorporation in insect food or for preparing other compositions.

B. Preparation of solid, semi-solid and liquid compositions.

1. *Solid composition:*

A solid composition containing 100 ppm of closantel sodium salt was prepared by intimately mixing 0.125 g of concentrate A with 23.6 g of bovine serum albumine, 32 g of milk-powder, 12 g of autolysed yeast, 0.5 g of benzoic acid, 0.05 g of butylated hydroxyanisole and an amount of cane-sugar to obtain 100 g in total.

2. *Paste:*

0.125 g of concentrate A were intimately mixed with 30 g of polyethylene glycol 1000, 7 g of bovine serum albumin, 1 g of vanillin, 1 g of cassis extract, 10 g of polyethylene glycol, 0.1 g of muscamone, 0.05 g of butylated hydroxyanisole and glycose to obtain 100 g in total. The pasty formulation contains 100 ppm of closantel sodium salt.

3. *Liquid composition:*

A liquid composition comprising 100 ppm of closantel sodium salt was prepared by dissolving 0.125 g of concentrate A, 15 g of cane-sugar, 5 g of urea, 0.2 g of Xanthan gum (KELTROL F), 5 g of sodium carbonate, 5 g of bovine serum albumin and 1 g of sodium lactate in sufficient water to obtain a total volume of 100 ml.

**Claims**

1. A method of reducing or eradicating an insect population by a method other than the systemic administration to warm-blooded animals characterized by administering to said insect population a sufficient chemosterilising amount of at least one compound of the formula:

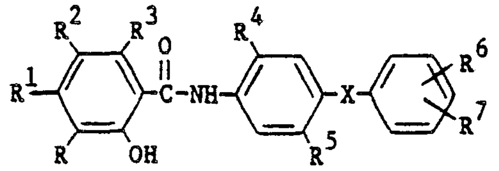

(I),

the physiologically acceptable amine addition salts and metal salts thereof, wherein:

R is selected from hydrogen, halo, $C_{1-5}$ alkyl and nitro;
$R^1$ is selected from hydrogen and halo;
$R^2$ is selected from hydrogen, halo, $C_{1-5}$ alkyl and nitro;
$R^3$ is selected from hydrogen and $C_{1-5}$ alkyl;
$R^4$ is selected from hydrogen, halo and $C_{1-5}$ alkyl;
$R^5$ is selected from hydrogen, halo, trifluoromethyl and cyano;
$R^6$ and $R^7$ are each independently from the other selected from hydrogen, halo and trifluoromethyl; and
X is selected from CO and CHCN.

2. A method according to claim 1 wherein said compound is administered to said insect population in an insect bait.

3. A method according to claim 1 wherein said compound is administered to said insect population by incorporating said compound in products on which the insects feed themselves.

4. A method according to claim 1 wherein said compound is administered to said insect population by spreading a composition containing the compound over a substantial part of the population's habitat.

5. A method according to any one of claims 1 to 4 wherein said compound is selected from *N*-[5-chloro-4-[(4-chlorophenyl)cyanomethyl]-2-methylphenyl]-2-hydroxy-3,5-diiodobenzamide, the physiologically acceptable amine addition salts and metal salts thereof.

6. A method according to any one of claims 1 to 5 wherein said insect population is a population of Musca domestica.

7. A method according to any one of claims 1 to 5 wherein said insect population is a population of Stomoxys calcitrans.

8. A method according to any one of claims 1 to 5 wherein said insect population is a population of Ceratitis capitata.

9. An insect chemosterilising composition, other than for the systemic administration to warm-blooded animals, comprising inert carrier materials and as an active ingredient at least one compound of the formula

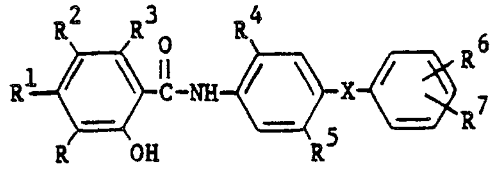

(I),

the physiologically acceptable amine addition salts and metal salts thereof, wherein:

R is selected from hydrogen, halo, $C_{1-5}$ alkyl and nitro;
$R^1$ is selected from hydrogen and halo;

$R^2$ is selected from hydrogen, halo, $C_{1-5}$ alkyl and nitro;
$R^3$ is selected from hydrogen and $C_{1-5}$ alkyl;
$R^5$ is selected from hydrogen, halo, trifluoromethyl and cyano;
$R^4$ is selected from hydrogen, halo and $C_{1-5}$ alkyl;
$R^6$ and $R^7$ are each independently from the other selected from hydrogen, halo and trifluoromethyl; and
X is selected from CO and CHCN.

10. A composition according to claim 9 wherein said active ingredient is selected from *N*-[5-chloro-4-[(4-chlorophenyl)cyanomethyl]-2-methylphenyl]-2-hydroxy-3,5-diiodobenzamide, the physiologically acceptable amine addition salts and metal salts thereof.

11. A composition according to any one of claims 9 and 10 which is an insect bait.

12. A method of preparing a composition according to any one of claims 9 to 11 which comprises mixing the active ingredient with the carrier materials.

**Patentansprüche**

1. Verfahren zur Verminderung oder Ausrottung einer Insektenpopulation nach einem von der systemischen Verabreichung an warmblütige Tiere unterschiedlichen Verfahren, dadurch gekennzeichnet, daß an diese Insektenpopulation eine ausreichende chemisch sterilisierende Menge wenigstens einer Verbindung der Formel:

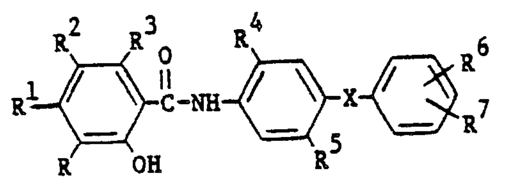

(I),

der physiologisch annehmbaren Aminadditionssalze und Metallsalze hievon verabreicht wird, in welcher Formel:
R unter Wasserstoff, Halogen, $C_{1-5}$-Alkyl und Nitro ausgewählt ist;
$R^1$ unter Wasserstoff und Halogen ausgewählt ist;
$R^2$ unter Wasserstoff, Halogen, $C_{1-5}$-Alkyl und Nitro ausgewählt ist;
$R^3$ unter Wasserstoff und $C_{1-5}$-Alkyl ausgewählt ist;
$R^4$ unter Wasserstoff, Halogen und $C_{1-5}$-Alkyl ausgewählt ist;
$R^5$ unter Wasserstoff, Halogen, Trifluormethyl und Cyano ausgewählt ist;
$R^6$ und $R^7$ jeweils unabhängig voneinander unter Wasserstoff, Halogen und Trifluormethyl ausgewählt sind; und
X unter CO und CHCN ausgewählt ist.

2. Verfahren nach Anspruch 1, worin die genannte Verbindung an die genannte Insektenpopulation in einem Insektenköder verabreicht wird.

3. Verfahren nach Anspruch 1, worin die genannte Verbindung dadurch an die genannte Insektenpopulation verabreicht wird, daß die genannte Verbindung in Produkte einverleibt wird, von denen sich die Insekten ernähren.

4. Verfahren nach Anspruch 1, worin die genannte Verbindung dadurch an die genannte Insektenpopulation verabreicht wird, daß eine die Verbindung enthaltende Zusammensetzung über einen wesentlichen Teil des Wohnortes der Population ausgebreitet wird.

5. Verfahren nach einem der Ansprüche 1 bis 4, worin die genannte Verbindung unter N-[5-Chlor-4-[(4-chlorphenyl)cyanomethyl]-2-methylphenyl]-2-hydroxy-3,5-diiodbenzamid, den physiologisch annehmbaren Aminadditionssalzen und Metallsalzen hievon ausgewählt wird.

6. Verfahren nach einem der Ansprüche 1 bis 5, worin die genannte Insektenpopulation eine Population von Musca domestica ist.

7. Verfahren nach einem der Ansprüche 1 bis 5, worin die genannte Insektenpopulation eine Population von Stomoxys calcitrans ist.

8. Verfahren nach einem der Ansprüche 1 bis 5, worin die genannte Insektenpopulation eine Population von Ceratitis capitata ist.

9. Insekten chemisch sterilisierende Zusammensetzung, die von einer zur systemischen Verabreichung an warmblütige Tiere bestimmten Zusammensetzung verschieden ist, umfassend inerte Trägermaterialien und als einen wirksamen Bestandteil wenigstens eine Verbindung der Formel:

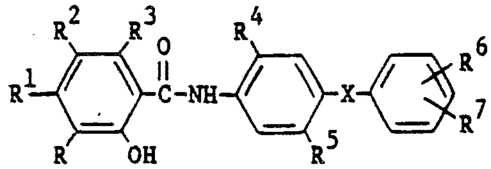

(I),

der physiologisch annehmbaren Aminadditionssalze und Metallsalze hievon, worin:

R unter Wasserstoff, Halogen, $C_{1-5}$-Alkyl und Nitro ausgewählt ist;

$R^1$ unter Wasserstoff und Halogen ausgewählt ist;

$R^2$ unter Wasserstoff, Halogen, $C_{1-5}$-Alkyl und Nitro ausgewählt ist;

$R^3$ unter Wasserstoff und $C_{1-5}$-Alkyl ausgewählt ist;

$R^4$ unter Wasserstoff, Halogen und $C_{1-5}$-Alkyl ausgewählt ist;

$R^5$ unter Wasserstoff, Halogen, Trifluormethyl und Cyano ausgewählt ist;

$R^6$ und $R^7$ jeweils unabhängig voneinander unter Wasserstoff, Halogen und Trifluormethyl ausgewählt sind; und

X unter CO und CHCN ausgewählt ist.

10. Zusammensetzung nach Anspruch 9, worin der genannte wirksame Bestandteil unter N-[5-Chlor-4-[(4-chlorphenyl)cyanomethyl]-2-methylphenyl]-2-hydroxy-3,5-diiodbenzamid, den physiologisch annehmbaren Aminadditionssalzen und Metallsalzen hievon ausgewählt ist.

11. Zusammensetzung nach einem der Ansprüche 9 und 10, welche ein Insektenköder ist.

12. Verfahren zur Bereitung einer Zusammensetzung nach einem der Ansprüche 9 bis 11, welches ein Vermischen des wirksamen Bestandteiles mit den Trägermaterialien umfaßt.

**Revendications**

1. Un procédé pour la réduction ou l'éradication d'une population d'insectes selon un procédé autre que l'administration systémique à des animaux à sang chaud, caractérisé par l'administration à ladite population d'insectes d'une quantité suffisante pour assurer la stérilisation chimique d'au moins un composé de formule:

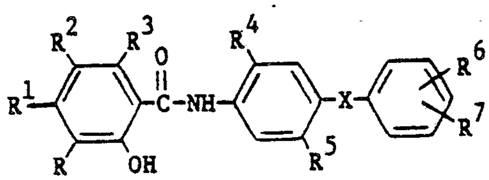

(I),

ses sels d'addition d'amines et ses sels métalliques physiologiquement acceptables, où:

R est choisi parmi l'hydrogène, un halogéno, un alkyle en $C_{1-5}$ et un nitro;

$R^1$ est choisi parmi un hydrogène et un halogéno;

$R^2$ est choisi parmi un hydrogène, un halogéno, un alkyle en $C_{1-5}$ et un nitro;

$R^3$ est choisi parmi un hydrogène et un alkyle en $C_{1-5}$;

$R^4$ est choisi parmi un hydrogène, un halogéno et un alkyle en $C_{1-5}$;

$R^5$ est choisi parmi un hydrogène, un halogéno, un trifluorométhyle et un cyano;

$R^6$ et $R^7$ sont choisis indépendamment l'un de l'autre parmi un hydrogène, un halogéno et un trifluorométhyle; et

X est choisi parmi CO et CHCN.

2. Un procédé selon la revendication 1 dans lequel ledit composé est administré à ladite population d'insectes dans un appât pour insectes.

3. Un procédé selon la revendication 1 dans lequel ledit composé est administré à ladite population d'insectes par corporation dudit composé dans des produits dont les insectes se nourrissent.

4. Un procédé selon la revendication 1 dans lequel ledit composé est administré à ladite population d'insectes par épandage d'une composition contenant le composé sur une partie importante de l'habitat de la population.

5. Un procédé selon l'une quelconque des revendications 1 à 4 dans lequel ledit composé est choisi parmi le N-[5-chloro-4-[(4-chlorophényl)cyanométhyl]-2-méthylphényl]-2-hydroxy-3,5-diiodobenzamide, ses sels d'addition d'amines et ses sels métalliques physiologiquement acceptables.

6. Un procédé selon l'une quelconque des revendications 1 à 5 dans lequel ladite population d'insectes est une population de Musca domestica.

7. Un procédé selon l'une quelconque des revendications 1 à 5 dans lequel ladite population d'insectes est une population de Stomoxys calcitrans.

8. Un procédé selon l'une quelconque des revendications 1 à 5 dans lequel ladite population d'insectes est une population de Ceratitis capitata.

9. Une composition de stérilisation chimique des insectes, non destinée à l'administration systémique aux animaux à sang chaud, comprenant des matières supports inertes et comme ingrédient actif au moins un composé de formule:

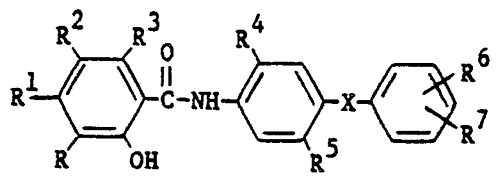

(I),

ses sels d'addition d'amines et ses sels métalliques physiologiquement acceptables, où:

R est choisi parmi l'hydrogène, un halogéno, un alkyle en $C_{1-5}$ et un nitro;

$R^1$ est choisi parmi un hydrogène et un halogéno;

$R^2$ est choisi parmi un hydrogène, un halogéno, un alkyle en $C_{1-5}$ et un nitro;

$R^3$ est choisi parmi un hydrogène et un alkyle en $C_{1-5}$;

$R^4$ est choisi parmi un hydrogène, un halogéno et un alkyle en $C_{1-5}$;

$R^5$ est choisi parmi un hydrogène, un halogéno, un trifluorométhyle et un cyano;

$R^6$ et $R^7$ sont choisis indépendamment l'un de l'autre parmi un hydrogène, un halogéno et un trifluorométhyle; et

X est choisi parmi CO et CHCN.

10. Une composition selon la revendication 9 dans laquelle ledit ingrédient actif est choisi parmi le N-[5-chloro-4-[(4-chlorophényl)cyanométhyl]-2-méthylphényl]-2-hydroxy-3,5-diiodobenzamide, et ses sels d'addition d'amines et sels métalliques physiologiquement acceptables.

11. Une composition selon l'une quelconque des revendications 9 et 10 qui est un appât pour insectes.

12. Un procédé de préparation d'une composition selon l'une quelconque des revendications 9 à 11 qui comprend le mélange de l'ingrédient actif avec les matières supports.